(19) Europäisches Patentamt
European Patent Office
Office européen des brevets

(11) **EP 4 549 876 A1**

(12) **EUROPEAN PATENT APPLICATION**
published in accordance with Art. 153(4) EPC

(43) Date of publication:
**07.05.2025 Bulletin 2025/19**

(21) Application number: **23831446.2**

(22) Date of filing: **27.06.2023**

(51) International Patent Classification (IPC):
**G01B 15/02** (2006.01)   **G01N 23/087** (2018.01)
**G01N 23/223** (2006.01)

(52) Cooperative Patent Classification (CPC):
**G01B 15/02; G01N 23/087; G01N 23/223**

(86) International application number:
**PCT/JP2023/023772**

(87) International publication number:
**WO 2024/005006 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.06.2022 JP 2022106442**

(71) Applicant: HORIBA, Ltd.
**Minami-ku
Kyoto-shi
Kyoto 601-8510 (JP)**

(72) Inventors:
• **MIYAMOTO, Shohei
Kyoto-shi, Kyoto 601-8510 (JP)**
• **OHASHI, Satoshi
Kyoto-shi, Kyoto 601-8510 (JP)**
• **AOYAMA, Tomoki
Kyoto-shi, Kyoto 601-8510 (JP)**
• **HIROSE, Jun
Kyoto-shi, Kyoto 601-8510 (JP)**

(74) Representative: **Isarpatent
Patent- und Rechtsanwälte
Barth Hassa Peckmann & Partner mbB
Friedrichstraße 31
80801 München (DE)**

(54) **THICKNESS MEASUREMENT METHOD, X-RAY ANALYSIS DEVICE, INFORMATION PROCESSING DEVICE, AND COMPUTER PROGRAM**

(57) There are provided a thickness measurement method, an X-ray analysis apparatus, an information processing apparatus, and a computer program that can measure the thickness of each layer of a multi-layer sample, which has been difficult to measure using conventional techniques.

In the thickness measurement method, a sample including a plurality of layers is irradiated with X-rays so that the X-rays pass through the plurality of layers, fluorescent X-rays generated from the sample are detected, transmitted X-rays that have passed through the sample are detected, a first relational equation that expresses a relationship between the intensity of the detected transmitted X-rays and the thickness of each layer and a second relational equation that expresses a relationship between the theoretical intensity ratio of the fluorescent X-rays and the transmitted X-rays corresponding to the thickness of each layer and the intensity ratio of the detected fluorescent X-rays and the detected transmitted X-rays are created, and the thickness of each layer that simultaneously satisfies the first relational equation and the second relational equation is calculated.

FIG.1

## Description

Technical Field

The present invention relates to a thickness measurement method, an X-ray analysis apparatus, an information processing apparatus, and a computer program for measuring the thickness of each layer included in a multi-layer sample.

Background Art

It is sometimes necessary to measure the thickness of each layer included in a multi-layer sample. As a method of measuring the thickness of each layer of a multi-layer sample, there is a method of irradiating the multi-layer sample with X-rays, detecting fluorescent X-rays generated from the multi-layer sample, and measuring the thickness of each layer based on the fluorescent X-rays. In addition, there is a method of detecting transmitted X-rays that have passed through a multi-layer sample and measuring the thickness of each layer based on the transmitted X-rays. Patent Literature 1 discloses a technique for measuring the thickness of a sample based on transmitted X-rays.

Citation List

Patent Literature:

Patent Literature 1: Japanese Patent Application Laid-Open No. 11-287643 Summary

Technical Problems

In the method of measuring the thickness based on fluorescent X-rays, the detected intensity of fluorescent X-rays generated from a portion far from the front surface is low. For this reason, there is a limit to the thickness that can be measured. The information on the transmitted X-rays that have passed through the multi-layer sample is a superposition of information on the plurality of layers. For this reason, it is difficult to measure the thickness of each layer based only on the transmitted X-rays.

The present invention has been made in view of the above circumstances, and it is an object of the present invention to provide a thickness measurement method, an X-ray analysis apparatus, an information processing apparatus, and a computer program that can measure the thickness of each layer of a multi-layer sample, which has been difficult to measure using conventional techniques.

Solution to Problems

A thickness measurement method according to one aspect of the present invention is characterized by comprising: irradiating a sample including a plurality of layers with X-rays so that the X-rays pass through the plurality of layers; detecting fluorescent X-rays generated from the sample; detecting transmitted X-rays that have passed through the sample; creating a first relational equation that expresses a relationship between an intensity of the detected transmitted X-rays and a thickness of each layer and a second relational equation that expresses a relationship between a theoretical intensity ratio of the fluorescent X-rays and the transmitted X-rays corresponding to the thickness of each layer and an intensity ratio of the detected fluorescent X-rays and the detected transmitted X-rays; and calculating the thickness of each layer that simultaneously satisfies the first relational equation and the second relational equation.

In one aspect of the present invention, a sample including a plurality of layers is irradiated with X-rays, and fluorescent X-rays and transmitted X-rays are detected. The thickness of each layer is calculated so as to simultaneously satisfy the first relational equation that expresses the relationship between the intensity of the detected transmitted X-rays and the thickness of each layer and the second relational equation that expresses the relationship between the theoretical intensity ratio of the fluorescent X-rays and the transmitted X-rays corresponding to the thickness of each layer and the intensity ratio of the detected fluorescent X-rays and the detected transmitted X-rays. Compared to conventional techniques that use only the detection result of fluorescent X-rays, it is possible to measure a larger thickness. In addition, the thickness of each of the plurality of layers can be more easily measured by using both the fluorescent X-rays and the transmitted X-rays.

In the thickness measurement method according one aspect of the present invention, it is characterized in that the sample includes three or more layers, the first relational equation related to a specific first energy, the second relational equation related to a specific second energy, and the first relational equation or the second relational equation related to another energy different from the first energy or the second energy are created, and the thickness of each layer that simultaneously satisfies the first relational equation related to the first energy, the second relational equation related to the second energy and the first relational equation or the second relational equation related to the another energy is calculated.

In one aspect of the present invention, the thickness of each layer is calculated so as to simultaneously satisfy the first relational equation related to the first energy, the second relational equation related to the second energy, and the first relational equation or the second relational equation related to another energy. By using three or more relational equations, it is possible to measure the thickness of each layer even when the sample includes three or more layers.

A thickness measurement method according to one aspect of the present invention is characterized by comprising: irradiating a sample including a plurality of layers with X-rays so that the X-rays pass through the plurality of layers; detecting fluorescent X-rays generated from the sample; detecting transmitted X-rays that have passed through the sample; creating a plurality of relational equations from among a first relational equation that expresses a relationship between an intensity of the detected transmitted X-rays and a thickness of each layer, a third relational equation that expresses a relationship between a theoretical intensity of the fluorescent X-rays corresponding to the thickness of each layer and an intensity of the detected fluorescent X-rays, and a fourth relational equation that expresses a relationship between a theoretical intensity of the transmitted X-rays corresponding to the thickness of each layer and the intensity of the detected transmitted X-rays; and calculating the thickness of each layer that simultaneously satisfies the plurality of relational equations.

In one aspect of the present invention, the thickness of each layer is calculated so as to simultaneously satisfy a plurality of relational equations among the first relational equation, the third relational equation that expresses the relationship between the theoretical intensity of the fluorescent X-rays and the intensity of the detected fluorescent X-rays, and the fourth relational equation that expresses the relationship between the theoretical intensity of the transmitted X-rays and the intensity of the detected transmitted X-rays. This method also makes it possible to easily measure the thickness of each of the plurality of layers.

In the thickness measurement method according one aspect of the present invention, it is characterized in that the sample includes a specific number of layers that are three or more layers, the specific number of relational equations is created from among the first relational equation related to a specific first energy, the third relational equation related to a specific second energy, the fourth relational equation related to a specific third energy, and the first relational equation, the third relational equation or the fourth relational equation related to another energy different from the first, second or third energy, and the thickness of each layer that simultaneously satisfies the specific number of created relational equations is calculated.

In one aspect of the present invention, the thickness of each layer is calculated so as to simultaneously satisfy a specific number of equations among the first relational equation, the third relational equation, the fourth relational equation, and the first relational equation, the third relational equation, or the fourth relational equation related to another energy. By using a specific number of relational equations (three or more relational equations), it is possible to measure the thickness of each layer when the sample includes the specific number of layers.

In the thickness measurement method according one aspect of the present invention, it is characterized in that X-rays to be emitted to the sample are generated and detected without the sample at a lower output than when the X-rays are emitted to the sample, and the first relational equation is an equation that expresses a relationship between a ratio of the intensity of the detected transmitted X-rays to the intensity of the detected X-rays and a thickness and a density of each layer and a mass absorption coefficient of each layer for X-rays.

In one aspect of the present invention, X-rays to be emitted to the sample are detected without the sample. By detecting X-rays without the sample, it is possible to detect X-rays at a high counting rate. The first relational equation can be created by taking the intensity of the detected X-rays as the intensity of X-rays emitted to the sample. In addition, the detector is protected by adjusting the X-ray output.

In the thickness measurement method according one aspect of the present invention, it is characterized in that the first relational equation is created using an intensity of the transmitted X-rays at an energy that does not correspond to a position of a peak of the fluorescent X-rays included in a spectrum of the fluorescent X-rays and a mass absorption coefficient for the X-rays at the energy.

In one aspect of the present invention, the first relational equation is created using the intensity of the transmitted X-rays at the energy that does not correspond to the position of the peak included in the spectrum of the fluorescent X-rays and the mass absorption coefficient for the X-rays at the energy. When the intensity of the detected transmitted X-rays includes the intensity of the fluorescent X-rays, the relationship between the intensity of the transmitted X-rays and the thickness of each layer deviates from the first relational equation. By using the energy that does not correspond to the position of the peak of the fluorescent X-rays, the intensity of the fluorescent X-rays included in the intensity of the transmitted X-rays decreases, and accordingly, the first relational equation is satisfied.

In the thickness measurement method according one aspect of the present invention, it is characterized in that the second relational equation is created using theoretical intensities of the fluorescent X-rays and the transmitted X-rays at an energy corresponding to a position of a peak of the fluorescent X-rays included in a spectrum of the fluorescent X-rays and intensities of the detected fluorescent X-rays and the detected transmitted X-rays at the energy.

In one aspect of the present invention, the second relational equation is created using the theoretical intensities of the fluorescent X-rays and the transmitted X-rays at the energy corresponding to the position of the peak included in the spectrum of the fluorescent X-rays and the intensities of the detected fluorescent X-rays and transmitted X-rays at the energy. By using the energy corresponding to the position of the peak of the fluorescent X-rays, the intensity of the detected fluorescent X-rays increases. By using the large intensity of the fluorescent X-rays, it is possible to accurately calculate the second relational equation.

In the thickness measurement method according one aspect of the present invention, it is characterized in that the third relational equation is created using the theoretical fluorescent X-rays at an energy corresponding to a position of a peak of the fluorescent X-rays included in a spectrum of the fluorescent X-rays and an intensity of the detected fluorescent X-rays at the energy.

In one aspect of the present invention, the third relational equation is created using the theoretical intensity of the fluorescent X-rays at the energy corresponding to the position of the peak included in the spectrum of the fluorescent X-rays and the intensity of the detected fluorescent X-rays at the energy. By using the large intensity of the fluorescent X-rays, it is possible to accurately calculate the third relational equation.

In the thickness measurement method according one aspect of the present invention, it is characterized in that the peak of the fluorescent X-rays is a peak of fluorescent X-rays caused by an element contained in a layer through which X-rays pass first among the plurality of layers.

In one aspect of the present invention, fluorescent X-rays caused by the element contained in the layer through which X-rays pass first are used. The intensity of the fluorescent X-rays generated from the first layer is large and accordingly, can be used to create the relational equation.

An X-ray analysis apparatus according to one aspect of the present invention is characterized by comprising: an irradiation unit that irradiates a sample including a plurality of layers with X-rays so that the X-rays pass through the plurality of layers; a fluorescent X-ray detector that detects fluorescent X-rays generated from the sample; a transmitted X-ray detector that detects transmitted X-rays that have passed through the sample; and an analysis unit, wherein the analysis unit creates a first relational equation that expresses a relationship between an intensity of the detected transmitted X-rays and a thickness of each layer and a second relational equation that expresses a relationship between a theoretical intensity ratio of the fluorescent X-rays and the transmitted X-rays corresponding to the thickness of each layer and an intensity ratio of the detected fluorescent X-rays and the detected transmitted X-rays, and calculates the thickness of each layer that simultaneously satisfies the first relational equation and the second relational equation.

An X-ray analysis apparatus according to one aspect of the present invention is characterized by comprising: an irradiation unit that irradiates a sample including a plurality of layers with X-rays so that the X-rays pass through the plurality of layers; a fluorescent X-ray detector that detects fluorescent X-rays generated from the sample; a transmitted X-ray detector that detects transmitted X-rays that have passed through the sample; and an analysis unit, wherein the analysis unit creates a plurality of relational equations from among a first relational equation that expresses a relationship between an intensity of the detected transmitted X-rays and a thickness of each layer, a third relational equation that expresses a relationship between a theoretical intensity of the fluorescent X-rays corresponding to the thickness of each layer and an intensity of the detected fluorescent X-rays, and a fourth relational equation that expresses a relationship between a theoretical intensity of the transmitted X-rays corresponding to the thickness of each layer and the intensity of the detected transmitted X-rays, and calculates the thickness of each layer that simultaneously satisfies the plurality of relational equations.

In one aspect of the present invention, the X-ray analysis apparatus irradiates a sample including a plurality of layers with X-rays and detects fluorescent X-rays and transmitted X-rays. The analysis unit included in the X-ray analysis apparatus calculates the thickness of each layer so as to simultaneously satisfy a plurality of relational equations that express the relationship between the intensity of the transmitted X-rays and the thickness of each layer and the relationship between the theoretical intensity of the fluorescent X-rays or the transmitted X-rays corresponding to the thickness of each layer and the intensity of the detected fluorescent X-rays or transmitted X-rays. By using both the fluorescent X-rays and the transmitted X-rays, it is possible to easily measure the thickness of each of the plurality of layers.

An information processing apparatus according to one aspect of the present invention is characterized by comprising: an acquisition unit that acquires a detection result of fluorescent X-rays, which are generated from a sample including a plurality of layers by irradiating the sample with X-rays so that the X-rays pass through the plurality of layers, and a detection result of transmitted X-rays that have passed through the sample; a relational equation creation unit that creates a first relational equation that expresses a relationship between an intensity of the detected transmitted X-rays and a thickness of each layer and a second relational equation that expresses a relationship between a theoretical intensity ratio of the fluorescent X-rays and the transmitted X-rays corresponding to the thickness of each layer and an intensity ratio of the detected fluorescent X-rays and the detected transmitted X-rays; and a calculation unit that calculates the thickness of each layer that simultaneously satisfies the first relational equation and the second relational equation.

An information processing apparatus according to one aspect of the present invention is characterized by comprising: an acquisition unit that acquires a detection result of fluorescent X-rays, which are generated from a sample including a plurality of layers by irradiating the sample with X-rays so that the X-rays pass through the plurality of layers, and a detection result of transmitted X-rays that have passed through the sample; a relational equation creation unit that creates a plurality of relational equations from among a first relational equation that expresses a relationship between an intensity of the detected transmitted X-rays and a thickness of each layer, a third relational equation that expresses a relationship between a theoretical intensity of the fluorescent X-rays corresponding to the thickness of each layer and an intensity of the detected fluorescent X-rays, and a fourth relational equation that expresses a relationship between a theoretical intensity of the transmitted X-rays corresponding to the thickness of each layer and the intensity of the detected transmitted X-rays; and a calculation unit that calculates the thickness of each layer that simultaneously satisfies the plurality of relational equations.

A computer program according to one aspect of the present invention is characterized by comprising: creating a first relational equation, which is based on a detection result of transmitted X-rays passing through a sample including a plurality of layers by irradiating the sample with X-rays so that the X-rays pass through the plurality of layers and which expresses a relationship between an intensity of the detected transmitted X-rays and a thickness of each layer, and a second relational equation, which is based on a detection result of fluorescent X-rays generated from the sample and a detection result of the transmitted X-rays and which expresses a relationship between a theoretical intensity ratio of the fluorescent X-rays and the transmitted X-rays corresponding to the thickness of each layer and an intensity ratio of the detected fluorescent X-rays and the detected transmitted X-rays; and calculating the thickness of each layer that simultaneously satisfies the first relational equation and the second relational equation.

A computer program according to one aspect of the present invention is characterized by comprising: creating a plurality of relational equations from among a first relational equation that is based on a detection result of transmitted X-rays passing through a sample including a plurality of layers by irradiating the sample with X-rays so that the X-rays pass through the plurality of layers and that expresses a relationship between an intensity of the detected transmitted X-rays and a thickness of each layer, a third relational equation that is based on a detection result of fluorescent X-rays generated from the sample and that expresses a relationship between a theoretical intensity of the fluorescent X-rays corresponding to the thickness of each layer and an intensity of the detected fluorescent X-rays, and a fourth relational equation that expresses a relationship between a theoretical intensity of the transmitted X-rays corresponding to the thickness of each layer and the intensity of the detected transmitted X-rays; and calculating the thickness of each layer that simultaneously satisfies the plurality of relational equations.

In one aspect of the present invention, the thickness of each layer is calculated so as to simultaneously satisfy a plurality of relational equations that express the relationship between the intensity of the transmitted X-rays passing through the sample including a plurality of layers and the thickness of each layer and the relationship between the theoretical intensity of the fluorescent X-rays or the transmitted X-rays corresponding to the thickness of each layer and the intensity of the detected fluorescent X-rays or transmitted X-rays. By using both the fluorescent X-rays and the transmitted X-rays, it is possible to easily measure the thickness of each of the plurality of layers.

Advantageous Effects of Invention

The present invention has excellent effects, such as being able to measure the thickness of each layer included in a larger number of multi-layer samples than before.

Brief Description of Drawings

FIG. 1 is a block diagram showing an example of the functional configuration of an X-ray analysis apparatus.
FIG. 2 is a block diagram showing an example of the internal configuration of an analysis unit.
FIG. 3 is a schematic cross-sectional view of a sample.
FIG. 4 is a graph showing examples of spectra of transmitted X-rays and fluorescent X-rays.
FIG. 5 is a flowchart showing an example of the procedure of processing for measuring the thickness of each layer of a sample, which is performed by the X-ray analysis apparatus.
FIG. 6 is a schematic cross-sectional view showing an example of a sample according to Embodiment 3.

Description of Embodiments

Hereinafter, the present invention will be specifically described with reference to the diagrams showing embodiments thereof.

<Embodiment 1>

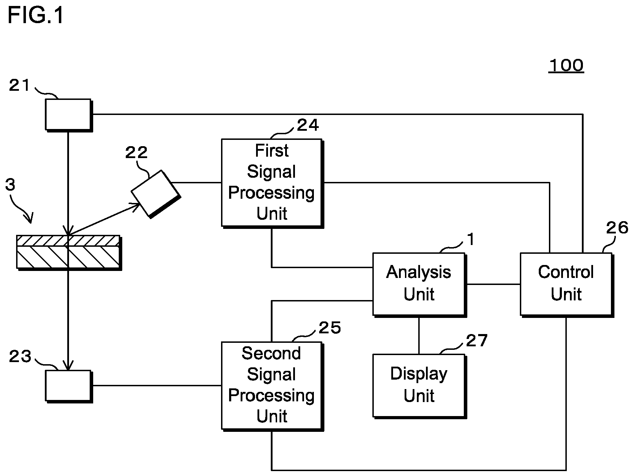

FIG. 1 is a block diagram showing an example of the functional configuration of an X-ray analysis apparatus 100. The X-ray analysis apparatus 100 includes an irradiation unit 21 that irradiates a sample 3 with X-rays, a fluorescent X-ray detector 22 that detects fluorescent X-rays generated from the sample 3 irradiated with X-rays, and a transmitted X-ray detector 23 that detects transmitted X-rays that have passed through the sample 3. The sample 3 is a multi-layer sample that includes a plurality of stacked layers. The X-ray analysis apparatus 100 performs a thickness measurement method for measuring the thickness of a layer included in the sample 3. The irradiation unit 21 includes an X-ray source that generates X-rays. The X-ray source is, for example, an X-ray tube. In FIG. 1, X-rays that are emitted to the sample 3, fluorescent X-rays, and transmitted X-rays are indicated by arrows.

The fluorescent X-ray detector 22 and the transmitted X-ray detector 23 are radiation detectors having radiation detection elements configured using semiconductors. For example, each of the fluorescent X-ray detector 22 and the transmitted X-ray detector 23 is an SDD (Silicon Drift Detector). A surface of the sample 3 that is irradiated with X-rays from the irradiation unit 21 is defined as a front surface. A surface opposite to the front surface is defined as a back surface. The fluorescent X-ray detector 22 is disposed so as to face the front surface of the sample 3. When the sample 3 is irradiated with X-rays from the irradiation unit 21, fluorescent X-rays are generated in the sample 3. The fluorescent X-rays are emitted from the front surface of the sample 3 to be incident on the fluorescent X-ray detector 22. The fluorescent X-ray detector 22 detects the incident fluorescent X-rays and outputs a signal having an intensity corresponding to the energy of the fluorescent X-rays.

The transmitted X-ray detector 23 is disposed at a position facing the irradiation unit 21. With the sample 3 disposed between the irradiation unit 21 and the transmitted X-ray detector 23, the sample 3 is irradiated with X-rays from the irradiation unit 21. At this time, the irradiation unit 21 faces the front surface of the sample 3, and the transmitted X-ray detector 23 faces the back surface of the sample 3. Some of the X-rays emitted from the irradiation unit 21 to the sample 3 pass through the sample 3. The X-rays that have passed through the sample 3 are called transmitted X-rays. The transmitted X-rays are incident on the transmitted X-ray detector 23. The transmitted X-ray detector 23 detects the incident transmitted X-rays and outputs a signal having an intensity corresponding to the energy of the transmitted X-rays.

A first signal processing unit 24 is connected to the fluorescent X-ray detector 22, and a second signal processing unit 25 is connected to the transmitted X-ray detector 23. The first signal processing unit 24 and the second signal processing unit 25 are connected to an analysis unit 1. The analysis unit 1 is configured using a computer. A display unit 27 such as a liquid crystal display or an EL display (Electroluminescent Display) is connected to the analysis unit 1. The irradiation unit 21, the first signal processing unit 24, the second signal processing unit 25, and the analysis unit 1 are connected to a control unit 26.

The control unit 26 controls the operations of the irradiation unit 21, the first signal processing unit 24, the second signal processing unit 25, and the analysis unit 1. The control unit 26 is configured using a computer including an arithmetic unit that performs arithmetic processing for controlling each unit. The control unit 26 may be configured to receive the user's operation and control each unit of the X-ray analysis apparatus 100 according to the received operation. The control unit 26 and the analysis unit 1 may be integrally configured.

The fluorescent X-ray detector 22 outputs a signal having an intensity corresponding to the energy of the fluorescent X-rays, and the first signal processing unit 24 receives the signal output from the fluorescent X-ray detector 22. The first signal processing unit 24 detects a signal value corresponding to the energy of the fluorescent X-rays detected by the fluorescent X-ray detector 22 by detecting the intensity of the received signal. The first signal processing unit 24 counts the signals for each signal value, and outputs to the analysis unit 1 data indicating the relationship between the signal value and the count number.

The transmitted X-ray detector 23 outputs a signal having an intensity corresponding to the energy of the transmitted X-rays, and the second signal processing unit 25 receives the signal output from the transmitted X-ray detector 23. The second signal processing unit 25 detects a signal value corresponding to the energy of the transmitted X-rays detected by the transmitted X-ray detector 23 by detecting the intensity of the received signal. The second signal processing unit 25 counts the signals for each signal value, and outputs to the analysis unit 1 data indicating the relationship between the signal value and the count number.

The analysis unit 1 receives the data indicating the relationship between the signal value and the count number that has been output from the first signal processing unit 24. The analysis unit 1 generates a spectrum of the fluorescent X-rays detected by the fluorescent X-ray detector 22 based on the data from the first signal processing unit 24. The signal value corresponds to the energy of the fluorescent X-rays, and the count number corresponds to the number of times the fluorescent X-rays are detected, that is, the intensity of the fluorescent X-rays. Therefore, from the relationship between the signal value and the count number, a spectrum of the fluorescent X-rays indicating the relationship between the energy and intensity of the fluorescent X-rays can be obtained.

In addition, the analysis unit 1 receives the data indicating the relationship between the signal value and the count number that has been output from the second signal processing unit 25. The analysis unit 1 generates a spectrum of the transmitted X-rays detected by the transmitted X-ray detector 23 based on the data from the second signal processing unit 25. The signal value corresponds to the energy of the transmitted X-rays, and the count number corresponds to the number of times the transmitted X-rays are detected, that is, the intensity of the transmitted X-rays. Therefore, from the relationship between the signal value and the count number, a spectrum of the transmitted X-rays indicating the relationship between the energy and intensity of the transmitted X-rays can be obtained.

The process of counting the signals output from the fluorescent X-ray detector 22 and the transmitted X-ray detector 23 for each signal value may be performed by the analysis unit 1 instead of the first signal processing unit 24 and the second signal processing unit 25. The generation of the fluorescent X-ray spectrum may be performed by the first signal processing unit 24, and the generation of the transmitted X-ray spectrum may be performed by the second signal processing unit 25. The analysis unit 1 stores spectrum data indicating the spectrum of fluorescent X-rays and spectrum data indicating the spectrum of transmitted X-rays. The display unit 27 displays the spectrum of the fluorescent X-rays or the transmitted X-rays. The user can check the spectrum of fluorescent X-rays from the sample 3 or the spectrum of transmitted X-rays that have passed through the sample 3. In addition, the analysis unit 1 performs information processing based on the spectra of the fluorescent X-rays and the transmitted X-rays. More specifically, the analysis unit 1 performs information processing in order to measure the thickness of each layer included in the sample 3. The analysis unit 1 corresponds to an information processing apparatus that performs information processing for measuring the thickness of each layer included in the sample 3.

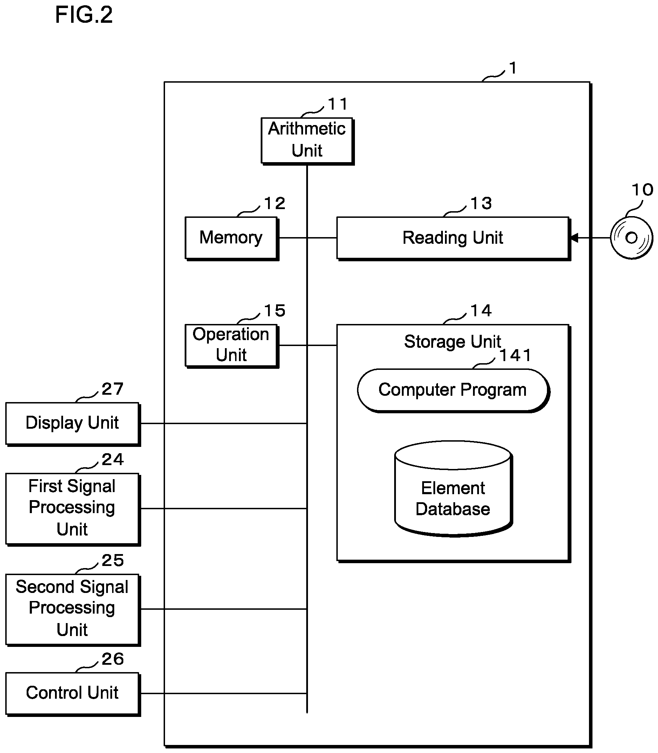

FIG. 2 is a block diagram showing an example of the internal configuration of the analysis unit 1. The analysis unit 1 is configured using a computer such as a personal computer. The analysis unit 1 includes an arithmetic unit 11, a memory 12, a reading unit 13, a storage unit 14, and an operation unit 15. The arithmetic unit 11 is configured using, for example, a CPU (Central Processing Unit), a GPU (Graphics Processing Unit), or a multi-core CPU. The arithmetic unit 11 may be configured using a quantum computer. The memory 12 stores temporary data generated along with calculations. The memory 12 is, for example, a RAM (Random Access Memory). The reading unit 13 reads information from a recording medium 10 such as an optical disk or a portable memory. The storage unit 14 is non-volatile, and is, for example, a hard disk or a non-volatile semiconductor memory. The operation unit 15 receives an input of information, such as text, by receiving an operation from the user. The operation unit 15 is, for example, a touch panel, a keyboard, or a pointing device. The user inputs various instructions to the analysis unit 1 by operating the operation unit 15. The analysis unit 1 receives the instructions input using the operation unit 15.

The arithmetic unit 11 causes the reading unit 13 to read a computer program 141 recorded on the recording medium 10, and stores the read computer program 141 in the storage unit 14. The arithmetic unit 11 performs processing necessary for the analysis unit 1 according to the computer program 141. In addition, the computer program 141 may be downloaded from the outside of the analysis unit 1. Alternatively, the computer program 141 may be stored in advance in the analysis unit 1. In these cases, the analysis unit 1 may not include the reading unit 13. In addition, the analysis unit 1 may be configured by a plurality of computers.

The display unit 27, the first signal processing unit 24, the second signal processing unit 25, and the control unit 26 are connected to the analysis unit 1. The display unit 27 displays an image. The analysis unit 1 outputs information necessary for information processing by displaying an image including information on the display unit 27. The analysis unit 1 receives signals from the first signal processing unit 24 and the second signal processing unit 25, and receives a control signal from the control unit 26. In addition, the analysis unit 1 and the control unit 26 may be configured by the same computer.

The storage unit 14 stores an element database in which data necessary for element analysis is recorded. In the element database, information describing the characteristics of a plurality of elements is recorded. For example, the positions of peaks included in the fluorescent X-ray spectrum of each element, the intensity ratio of a plurality of peaks, the mass absorption coefficient, and the density are recorded in the element database. The peaks included in the X-ray spectrum mean peaks caused by X-rays, but do not mean peaks caused by noise. The position of the peak is expressed as the energy of X-rays. In addition, the element database may be provided outside the analysis unit 1. For example, the element database is stored in a storage device connected to the analysis unit 1 through a communication network. The element database may be configured using a cloud. The arithmetic unit 11 accesses the element database through the communication network and performs processing to refer to the data recorded in the element database.

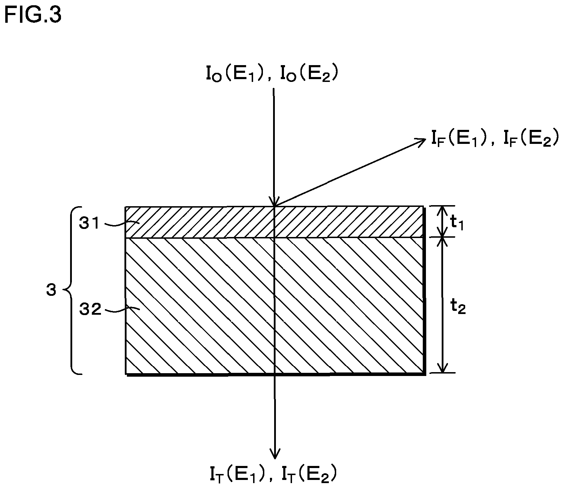

FIG. 3 is a schematic cross-sectional view of the sample 3. The sample 3 includes a first layer 31 and a second layer 32 that are stacked. The thickness of the first layer 31 is $t_1$, and the thickness of the second layer 32 is $t_2$. The thickness $t_1$ of the first layer 31 is smaller than the thickness $t_2$ of the second layer 32. For example, the second layer 32 is a base material, and the first layer 31 is a coating that covers the base material. For example, the sample 3 is a part of a plate-shaped material. The analysis unit 1 performs information processing for measuring the thickness $t_1$ of the first layer 31 and the thickness $t_2$ of the second layer 32. As shown in FIG. 3, X-rays are emitted to the sample 3 so as to pass through the first layer 31 and the second layer 32 in this order. Fluorescent X-rays are generated from the first layer 31 irradiated with X-rays. The fluorescent X-rays detected by the fluorescent X-ray detector 22 are mainly fluorescent X-rays generated from the first layer 31. The fluorescent X-rays generated from the second layer 32 are absorbed by the first layer 31 and are hardly detected by the fluorescent X-ray detector 22.

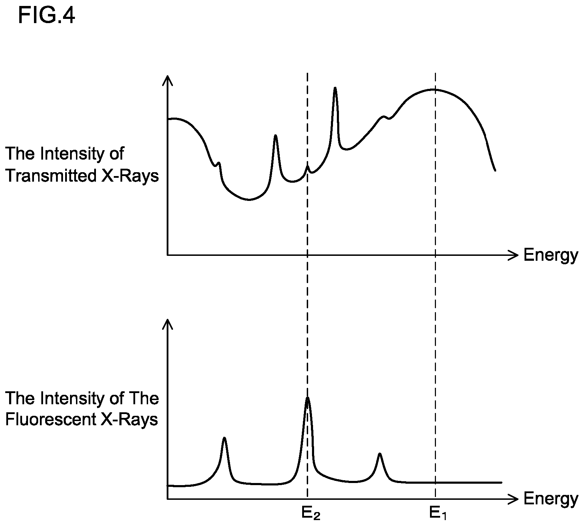

FIG. 4 is a graph showing examples of spectra of transmitted X-rays and fluorescent X-rays. The upper part shows the spectrum of transmitted X-rays, and the lower part shows the spectrum of fluorescent X-rays. In the upper diagram, the horizontal axis indicates the energy of transmitted X-rays, and the vertical axis indicates the intensity of transmitted X-rays. In the lower diagram, the horizontal axis indicates the energy of fluorescent X-rays, and the vertical axis indicates the intensity of the fluorescent X-rays. For example, the intensity of X-rays is expressed as a count number per unit time. Two different energies of transmitted X-rays from which the spectra are obtained are defined as $E_1$ and $E_2$. The first energy $E_1$ is assumed to be an energy that does not correspond to the position of a peak included in the spectrum of the fluorescent X-rays generated from the sample 3. The second energy $E_2$ is assumed to be an energy corresponding to the position of a peak included in the spectrum of the fluorescent X-rays generated from the first layer 31.

The intensity of X-rays emitted to the sample 3 at the energy $E_1$ is defined as $I_0(E_1)$. The X-ray intensity $I_0(E_1)$ is the intensity of X-rays that should be emitted to the sample 3 when the sample 3 is not irradiated with the X-rays, and is the intensity of X-rays that are emitted from the irradiation unit 21 without the sample 3 and detected by the transmitted X-ray detector 23. The intensity of the transmitted X-rays detected by the transmitted X-ray detector 23 at the energy $E_1$ when the sample 3 is irradiated with the X-rays is defined as $I_T(E_1)$.

The mass absorption coefficient of the first layer 31 for X-rays at the energy $E_1$ is defined as $\mu_1(E_1)$. The mass absorption coefficient of the second layer 32 for X-rays at the energy $E_1$ is defined as $\mu_2(E_1)$. The density of the first layer 31 is defined as $\rho_1$, and the density of the second layer 32 is defined as $\rho_2$. The intensity $I_T(E_1)$ of transmitted X-rays at the energy $E_1$ can be expressed by the following Equation (1).

$$I_T(E_1) = I_0(E_1)\exp(-\mu_1(E_1)\rho_1 t_1 - \mu_2(E_1)\rho_2 t_2) \dots (1)$$

By rearranging Equation (1), the following Equation (2) is obtained. Equation (2) is a first relational equation that expresses the relationship between the intensity $I_T(E_1)$ of transmitted X-rays at the energy $E_1$ and the thickness $t_1$ of the first layer 31 and the thickness $t_2$ of the second layer 32. In addition, Equation (2) is a first relational equation related to the first energy $E_1$.

$$\mu_1(E_1)\rho_1 t_1 + \mu_2(E_1)\rho_2 t_2 + \ln(I_T(E_1)/I_0(E_1)) = 0 \dots (2)$$

The intensity of X-rays emitted to the sample 3 at the energy $E_2$ is defined as $I_0(E_2)$. The intensity of the fluorescent X-rays detected by the fluorescent X-ray detector 22 at the energy $E_2$ when the sample 3 is irradiated with the X-rays is defined as $I_F(E_2)$. The intensity of the transmitted X-rays detected by the transmitted X-ray detector 23 at the energy $E_2$ is defined as $I_T(E_2)$. The intensity $I_T(E_2)$ of the detected transmitted X-rays also includes the intensity of the fluorescent X-rays that are generated from the first layer 31 and transmitted through the first layer 31 and the second layer 32. In addition, the theoretical intensity of the fluorescent X-rays at the energy $E_2$ calculated based on the thickness $t_1$ of the first layer 31 and the thickness $t_2$ of the second layer 32 is defined as $I_F{\sim}(E_2, t_1, t_2)$, and the theoretical intensity of the transmitted X-rays at the energy $E_2$ is defined as $I_T{\sim}(E_2, t_1, t_2)$.

The theoretical fluorescent X-ray intensity and the theoretical transmitted X-ray intensity are calculated based on information on the X-ray analysis apparatus 100 and the sample 3. The intensity of X-rays incident on the front surface of the sample 3 is calculated based on the intensity of X-rays generated by the irradiation unit 21, the solid angle of X-rays emitted from the irradiation unit 21 to the sample 3, the absorption coefficient of X-rays by air, the density of the air, and the distance from the irradiation unit 21 to the sample 3. The intensity of X-rays incident on the front surface of the sample 3 may be obtained experimentally. The intensity of X-rays at any depth from the front surface of the sample 3 is calculated based on the intensity of X-rays incident on the front surface of the sample 3, the angle of incidence, the mass absorption coefficient of the sample 3 for X-rays, and the density of the sample 3. Based on the concentration of each element contained in the sample 3 and the mass absorption coefficient of each element for X-rays, the proportion of X-rays absorbed by each element in a minute portion at a given depth from the front surface of the sample 3 is calculated.

The ratio of fluorescent X-rays of a specific ray type emitted from an element to the X-rays absorbed by the element is calculated based on the proportion of X-rays absorbed by the element that are absorbed by each electron shell, the proportion of fluorescent X-rays emitted as electrons transition to each electron shell, and the proportion of fluorescent X-rays of a specific ray type among the fluorescent X-rays emitted. The solid angle at which the generated fluorescent X-rays are incident on the fluorescent X-ray detector 22 is calculated based on the distance from the sample 3 to the fluorescent X-ray detector 22. The proportion of fluorescent X-rays generated at a given depth from the front surface of the sample 3 that pass through the sample 3 up to the front surface of the sample 3 is calculated based on the mass absorption coefficient of the sample 3 for the fluorescent X-rays, the density of the sample 3, and the emission angle of the fluorescent X-rays that can be incident on the fluorescent X-ray detector 22. In addition, the intensity of the fluorescent X-rays is converted into an intensity perpendicular to the direction in which the fluorescent X-rays are detected, based on the incidence angle of the X-rays and the emission angle of the fluorescent X-rays. From the values obtained above, the intensity of the fluorescent X-rays that are generated from a minute portion at a given depth from the front surface of the sample 3 and emitted up to the front surface of the sample 3 is calculated.

By integrating the calculated intensity of the fluorescent X-rays with respect to the energy of the emitted X-rays and further integrating this with respect to the depth from the front surface of the sample 3, the intensity of the fluorescent X-rays emitted to the front surface of the sample 3 is obtained as a function of the thickness $t_1$ of the first layer 31 and the thickness $t_2$ of the second layer 32. In this manner, the theoretical intensity $I_F{\sim}(E_2, t_1, t_2)$ of the fluorescent X-rays at the energy $E_2$ is obtained. $I_F{\sim}(E_2, t_1, t_2)$ is a function of $t_1$ and $t_2$.

Since the energy $E_2$ is energy corresponding to the peak of fluorescent X-rays, fluorescent X-rays are mixed in the transmitted X-rays at the energy $E_2$. The intensity of the X-rays incident on the front surface of the sample 3 is calculated as described above. The intensity of the incident X-rays when the incident X-rays pass through the sample 3 is calculated using an equation similar to Equation (1). As described above, the intensity of X-rays at a given depth from the front surface of the sample 3, the proportion of X-rays absorbed by each element in a minute portion at a given depth from the front surface of the sample 3, and the ratio of fluorescent X-rays of a specific ray type emitted from an element to the X-rays absorbed by the element are calculated. The solid angle at which the generated fluorescent X-rays are incident on the transmitted X-ray detector 23 is calculated based on the depth of the minute portion and the distance from the sample 3 to the transmitted X-ray detector 23. The proportion of the fluorescent X-rays that pass through the sample 3 up to the front surface of the sample 3 is calculated based on the mass absorption coefficient of each layer of the sample 3 for the fluorescent X-rays and the density of each layer. The calculated proportion is obtained as a function of the thickness $t_1$ of the first layer 31 and the thickness $t_2$ of the second layer 32. From the values obtained above, the intensity of the fluorescent X-rays that are generated from a minute portion at a given depth from the front surface of the sample 3 and emitted up to the back surface of the sample 3 is calculated.

By integrating the calculated intensity of the fluorescent X-rays with respect to the energy of the emitted X-rays and further integrating this with respect to the depth from the front surface of the sample 3, the intensity of the fluorescent X-rays emitted to the back surface of the sample 3 is obtained as a function of the thickness $t_1$ of the first layer 31 and the thickness $t_2$ of the second layer 32. Based on the intensity of the incident X-rays when the incident X-rays pass through the sample 3 and the intensity of the fluorescent X-rays emitted to the back surface of the sample 3, the theoretical intensity $I_T{\sim}(E_2, t_1, t_2)$ of the transmitted X-rays at the energy $E_2$ is obtained. $I_T{\sim}(E_2, t_1, t_2)$ is a function of $t_1$ and $t_2$.

Information required to calculate the theoretical intensities of fluorescent X-rays and transmitted X-rays is stored in advance in the storage unit 14 or recorded in advance in the element database. For example, the intensity of X-rays generated by the irradiation unit 21, the solid angle of X-rays emitted from the irradiation unit 21 to the sample 3, the absorption coefficient of X-rays by air, the density of the air, the distance from the irradiation unit 21 to the sample 3, and the distance from the sample 3 to the fluorescent X-ray detector 22 are stored in advance in the storage unit 14. For example, the mass absorption coefficient of each element, the density of each element, the proportion of X-rays absorbed by each element that are absorbed by each electron shell, the proportion of fluorescent X-rays emitted as electrons transition to each electron shell, and the proportion of fluorescent X-rays of a specific ray type among the fluorescent X-rays emitted are recorded in advance in the element database.

A specific method for calculating the theoretical intensities of fluorescent X-rays and transmitted X-rays may be basically the same as the method described above. As a method for finely correcting the theoretical intensities of fluorescent X-rays and transmitted X-rays, it is possible to use various methods that are conventionally known. For example, any of various different methods that are conventionally known may be used to correct the theoretical intensities of fluorescent X-rays and transmitted X-rays according to the absorption of X-rays by air, the sensitivity of the fluorescent X-ray detector 22 or the transmitted X-ray detector 23, or the effects of coexisting elements.

The ratio of the theoretical intensity $I_F{\sim}(E_2, t_1, t_2)$ of fluorescent X-rays to the theoretical intensity $I_T{\sim}(E_2, t_1, t_2)$ of transmitted X-rays is considered to be equal to the ratio of the intensity $I_F(E_2)$ of detected fluorescent X-rays to the intensity $I_T(E_2)$ of detected transmitted X-rays. Therefore, the following Equation (3) is satisfied.

$$I_F{\sim}(E_2, t_1, t_2)/I_T{\sim}(E_2, t_1, t_2) - I_F(E_2)/I_T(E_2) = 0 \; \dots \; (3)$$

Equation (3) is a second relational equation that expresses the relationship between the theoretical intensity ratio of fluorescent X-rays and transmitted X-rays corresponding to the thickness $t_1$ of the first layer 31 and the thickness $t_2$ of the second layer 32 and the intensity ratio of detected fluorescent X-rays and transmitted X-rays. In addition, Equation (3) is a second relational equation related to the second energy $E_2$. Both Equations (2) and (3) include the thickness $t_1$ of the first layer 31 and the thickness $t_2$ of the second layer 32 as variables. By determining $t_1$ and $t_2$ so as to simultaneously satisfy Equations (2) and (3), the thickness $t_1$ of the first layer 31 and the thickness $t_2$ of the second layer 32 can be obtained.

In addition, as the intensity of transmitted X-rays, a value obtained by subtracting the background may be used. For example, a value obtained by subtracting the intensity of X-rays from the irradiation unit 21 transmitted through the sample 3 from the intensity of transmitted X-ray at the energy $E_2$ detected by the transmitted X-ray detector 23 at the energy

$E_2$ may be set as the intensity $I_T(E_2)$ of the detected transmitted X-rays. At this time, the intensity $I_T(E_2)$ of the transmitted X-rays is the intensity of fluorescent X-rays generated inside the sample 3 and detected by the transmitted X-ray detector 23. In addition, as the theoretical intensity $I_T{\sim}(E_2, t_1, t_2)$ of transmitted X-rays, only the intensity of fluorescent X-rays generated inside the sample 3 is calculated without including the intensity of X-rays from the irradiation unit 21 that have passed through the sample 3. Even in this case, Equation (3) is similarly satisfied by calculating the ratio of $I_F{\sim}(E_2, t_1, t_2)$ to the theoretical intensity $I_T{\sim}(E_2, t_1, t_2)$ of transmitted X-rays and the ratio of $I_F(E_2)$ to the intensity $I_T(E_2)$ of detected transmitted X-rays.

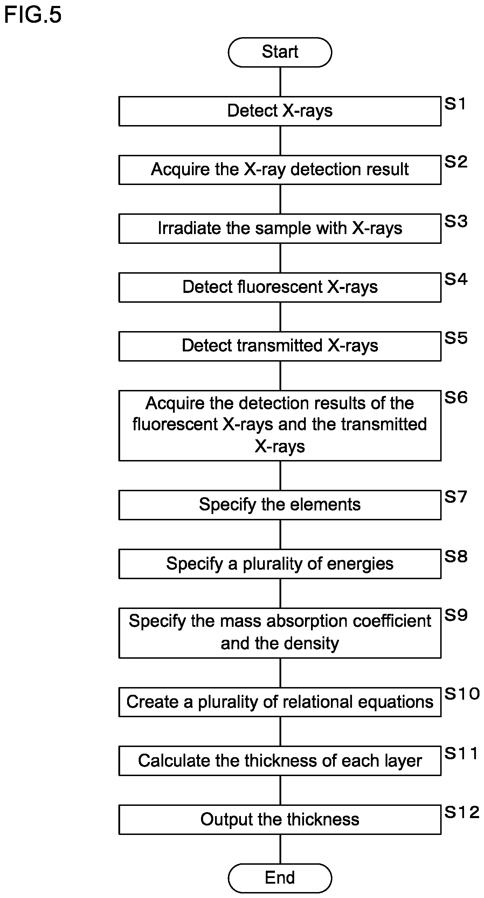

FIG. 5 is a flowchart showing an example of the procedure of processing for measuring the thickness of each layer of the sample 3, which is performed by the X-ray analysis apparatus 100. Hereinafter, the step is abbreviated as S. The analysis unit 1 performs processing in such a manner that the arithmetic unit 11 performs information processing according to the computer program 141. The irradiation unit 21 generates X-rays without the sample 3, and the transmitted X-ray detector 23 detects the X-rays (S1). In S1, the irradiation unit 21 generates X-rays with a lower output than when the sample 3 is irradiated with X-rays. For example, the control unit 26 reduces the current flowing through the X-ray tube of the irradiation unit 21. The transmitted X-ray detector 23 is protected by adjusting the X-ray output to be low. In addition, the transmitted X-ray detector 23 can detect X-rays at a high counting rate by detecting X-rays without the sample 3. The transmitted X-ray detector 23 outputs a signal having an intensity corresponding to the energy of the detected X-rays to the second signal processing unit 25, and the second signal processing unit 25 counts the signals for each signal value and outputs data indicating the relationship between the signal value and the count number to the analysis unit 1.

The analysis unit 1 acquires the X-ray detection result by receiving the data from the second signal processing unit 25 (S2). The analysis unit 1 generates an X-ray spectrum and stores the spectrum data in the storage unit 14. Through the processes of S1 and S2, the analysis unit 1 acquires the intensity of X-rays that should be emitted to the sample 3 when the sample 3 is not irradiated with the X-rays. In addition, the intensity of X-rays when the sample 3 is not irradiated with the X-rays may be stored in advance in the storage unit 14, and the processes of S1 and S2 may be omitted.

In a state in which there is the sample 3, the irradiation unit 21 generates X-rays and irradiates the sample 3 with the X-rays (S3). In S3, the irradiation unit 21 generates X-rays with a higher output than in S1. For example, the control unit 26 increases the current flowing through the X-ray tube of the irradiation unit 21. The sample 3 is held in the X-ray analysis apparatus 100 so that X-rays pass through the first layer 31 and the second layer 32 in this order. The first layer 31 corresponds to a layer through which X-rays are transmitted first among a plurality of layers included in the sample 3. By the emission of X-rays, fluorescent X-rays are generated from the sample 3. The fluorescent X-ray detector 22 detects fluorescent X-rays (S4). The transmitted X-ray detector 23 detects transmitted X-rays that have passed through the sample 3 (S5).

The fluorescent X-ray detector 22 outputs a signal having an intensity corresponding to the energy of the fluorescent X-rays to the first signal processing unit 24, and the first signal processing unit 24 counts the signals for each signal value and outputs data indicating the relationship between the signal value and the count number to the analysis unit 1. The transmitted X-ray detector 23 outputs a signal having an intensity corresponding to the energy of the transmitted X-rays to the second signal processing unit 25, and the second signal processing unit 25 counts the signals for each signal value and outputs data indicating the relationship between the signal value and the count number to the analysis unit 1. The analysis unit 1 acquires the detection results of the fluorescent X-rays and the transmitted X-rays by receiving the data from the first signal processing unit 24 and the second signal processing unit 25 (S6). The analysis unit 1 generates spectra of the fluorescent X-rays and the transmitted X-rays, and stores the spectrum data in the storage unit 14. The process of S6 corresponds to an acquisition unit.

The analysis unit 1 specifies the elements contained in each layer (S7). The elements contained in the first layer 31 and the second layer 32 are stored in advance in the storage unit 14. In S7, the arithmetic unit 11 specifies the elements contained in the first layer 31 and the second layer 32 by reading data indicating the elements contained in the first layer 31 and the second layer 32 that are stored in the storage unit 14. In S7, the user may input information indicating the elements contained in the first layer 31 and the second layer 32 by operating the operation unit 15, and the arithmetic unit 11 may specify the elements contained in the first layer 31 and the second layer 32 as the elements indicated by the input information. The process of S7 may be omitted.

The analysis unit 1 specifies a plurality of energies (S8). Specifically, two energies $E_1$ and $E_2$ are specified. The energy $E_1$ that does not correspond to the position of the peak included in the spectrum of fluorescent X-rays is specified, and the energy $E_2$ that corresponds to the position of the peak included in the spectrum of fluorescent X-rays is specified. The values of the energies $E_1$ and $E_2$ are stored in advance in the storage unit 14. In S8, the arithmetic unit 11 specifies the energies $E_1$ and $E_2$ by reading the values of $E_1$ and $E_2$ stored in the storage unit 14. In S8, the user may input the values of the energies $E_1$ and $E_2$ by operating the operation unit 15, and the arithmetic unit 11 may specify the values of the energies $E_1$ and $E_2$ as input values. Alternatively, the values of $E_1$ and $E_2$ may be stored in the storage unit 14 in association with the element, and the arithmetic unit 11 may specify the energies $E_1$ and $E_2$ by reading the values of $E_1$ and $E_2$ associated with the specified element.

The analysis unit 1 specifies the mass absorption coefficient of each layer for X-rays and the density of each layer (S9). The values of the mass absorption coefficients $\mu_1(E_1)$, $\mu_1(E_2)$, $\mu_2(E_1)$, and $\mu_2(E_2)$ of the first layer 31 and the second layer for X-rays and the values of the densities $\rho_1$ and $\rho_2$ of the first layer 31 and the second layer 32 are stored in advance in the storage unit 14. In S9, the arithmetic unit 11 specifies the mass absorption coefficients for X-rays and densities of the first layer 31 and the second layer by reading the values of $\mu_1(E_1)$, $\mu_1(E_2)$, $\mu_2(E_1)$, $\mu_2(E_2)$, $\rho_1$, and $\rho_2$ stored in the storage unit 14. In S9, the user may input the values of $\mu_1(E_1)$, $\mu_1(E_2)$, $\mu_2(E_1)$, $\mu_2(E_2)$, $\rho_1$, and $\rho_2$ by operating the operation unit 15, and the arithmetic unit 11 may specify the values of $\mu_1(E_1)$, $\mu_1(E_2)$, $\mu_2(E_1)$, $\mu_2(E_2)$, $\rho_1$, and $\rho_2$ as input values.

Alternatively, the compositions of the first layer 31 and the second layer may be stored in advance in the storage unit 14. In S9, the arithmetic unit 11 may specify the mass absorption coefficients of the first layer 31 and the second layer for X-rays by reading the mass absorption coefficients for X-rays associated with the compositions of the first layer 31 and the second layer 32 from a database that stores the compositions of substances and the mass absorption coefficients for X-rays in association with each other. The arithmetic unit 11 may specify the densities of the first layer 31 and the second layer by reading the densities associated with the compositions of the first layer 31 and the second layer 32 from a database that stores the compositions of substances and densities in association with each other.

The analysis unit 1 creates a plurality of relational equations that express the relationship between the intensity of the transmitted X-rays or fluorescent X-rays and the thickness of each layer (S10). In S10, the arithmetic unit 11 creates a first relational equation that expresses the relationship between the intensity of the transmitted X-rays and the thickness of each layer. Specifically, the arithmetic unit 11 creates, as the first relational equation, Equation (2) that expresses the relationship between the intensity $I_T(E_1)$ of the transmitted X-rays at the energy $E_1$ and the thickness $t_1$ of the first layer 31 and the thickness $t_2$ of the second layer 32. The arithmetic unit 11 uses the intensity of X-rays at the energy $E_1$ acquired by the processes of S1 to S2 as $I_0(E_1)$ included in Equation (2). By using the intensity of X-rays detected without the sample 3 as the intensity of X-rays emitted to the sample 3, it is possible to create Equation (2), which expresses the relationship between the ratio of the intensity of the transmitted X-rays to the intensity of the emitted X-rays and the thickness, density, and mass absorption coefficient of each layer. By using the intensity of X-rays detected without the sample 3 as the intensity of X-rays emitted to the sample 3, the intensity of X-rays measured at a high counting rate can be used as the intensity of X-rays emitted to the sample 3. Since the intensity of the X-rays emitted to the sample 3 is measured at a high counting rate, the accuracy is high, and the ratio of the intensity of the transmitted X-rays to the intensity of the emitted X-rays can be obtained accurately. Equation (2) includes the thickness $t_1$ of the first layer 31 and the thickness $t_2$ of the second layer 32 as variables.

In addition, in S10, the analysis unit 1 creates a second relational equation that expresses the relationship between the theoretical intensity ratio of the fluorescent X-rays and the transmitted X-rays corresponding to the thickness of each layer and the intensity ratio of the detected fluorescent X-rays and transmitted X-rays. Specifically, the arithmetic unit 11 calculates the theoretical intensity $I_T{\sim}(E_2, t_1, t_2)$ of the transmitted X-rays at the energy $E_2$ and the theoretical intensity $I_F{\sim}(E_2, t_1, t_2)$ of the fluorescent X-rays at the energy $E_2$. Information required to calculate the theoretical intensities of the fluorescent X-rays and the transmitted X-rays is stored in advance in the storage unit 14 or recorded in advance in the element database. In addition, the arithmetic unit 11 creates, as the second relational equation, Equation (3) that expresses the relationship between the theoretical intensity ratio of the fluorescent X-rays and the transmitted X-rays corresponding to the thickness $t_1$ of the first layer 31 and the thickness $t_2$ of the second layer 32 and the intensity ratio of the detected fluorescent X-rays and transmitted X-rays. Equation (3) includes the thickness $t_1$ of the first layer 31 and the thickness $t_2$ of the second layer 32 as variables. The process of S10 corresponds to a relational equation creation unit.

The analysis unit 1 calculates the thickness of each layer by determining, through optimization calculation, the thickness of each layer that simultaneously satisfies the created Equations (2) and (3) (S11). In S11, the arithmetic unit 11 calculates the thickness $t_1$ of the first layer 31 and the thickness $t_2$ of the second layer 32 by performing an optimization calculation according to a predetermined algorithm. For example, the arithmetic unit 11 sets the value of the thickness $t_1$ of the first layer 31 to a specific initial value, substitutes the value of $t_1$ into Equation (2), calculates the value of the thickness $t_2$ of the second layer 32, substitutes the values of $t_1$ and $t_2$ into Equation (3), and calculates the left side of Equation (3). Based on the calculation result of the left side of Equation (3), the arithmetic unit 11 changes the value of $t_1$ so that the calculation result of the left side of Equation (3) approaches zero. The arithmetic unit 11 repeats the calculation of the value of $t_2$ according to the value of $t_1$, the calculation of the left side of Equation (3), and the change of the value of $t_1$ until the calculation result of the left side of Equation (3) becomes sufficiently close to zero.

For example, when the absolute value of the calculation result of the left side of Equation (3) is equal to or less than a predetermined threshold value, the arithmetic unit 11 determines that the calculation result of the left side of Equation (3) is sufficiently close to zero. The threshold value is stored in advance in the storage unit 14. The values of $t_1$ and $t_2$ at this point in time almost satisfy Equations (2) and (3) simultaneously. When the calculation result of the left side of Equation (3) becomes sufficiently close to zero, the arithmetic unit 11 ends the calculation and sets the values of $t_1$ and $t_2$ at that point in time as the thickness $t_1$ of the first layer 31 and the thickness $t_2$ of the second layer 32. In this manner, the analysis unit 1 calculates the thickness $t_1$ of the first layer 31 and the thickness $t_2$ of the second layer 32. Other methods may be used for the optimization calculation. The process of S11 corresponds to a calculation unit.

The analysis unit 1 outputs the calculated thickness $t_1$ of the first layer 31 and the calculated thickness $t_2$ of the

second layer 32 (S12). In S12, the arithmetic unit 11 outputs the thickness $t_1$ of the first layer 31 and the thickness $t_2$ of the second layer 32 by displaying the calculated values of the thickness $t_1$ of the first layer 31 and the thickness $t_2$ of the second layer 32 on the display unit 27. The arithmetic unit 11 stores the values of the thickness $t_1$ of the first layer 31 and the thickness $t_2$ of the second layer 32 in the storage unit 14. After the end of S12, the analysis unit 1 ends the process for measuring the thickness $t_1$ of the first layer 31 and the thickness $t_2$ of the second layer 32. The X-ray analysis apparatus 100 measures the thickness $t_1$ of the first layer 31 and the thickness $t_2$ of the second layer 32 through the processes S1 to S12.

As described above in detail, the X-ray analysis apparatus 100 irradiates the sample 3 with X-rays and detects fluorescent X-rays and transmitted X-rays. The analysis unit 1 calculates the thickness of each layer so as to simultaneously satisfy Equation (2), which expresses the relationship between the intensity of the detected transmitted X-rays and the thickness of each layer, and Equation (3), which expresses the relationship between the theoretical intensity ratio of the fluorescent X-rays and the transmitted X-rays corresponding to the thickness of each layer and the intensity ratio of the detected fluorescent X-rays and transmitted X-rays. In conventional techniques that use only the detection result of fluorescent X-rays, there is a limit on the thickness that can be measured. In the present embodiment, however, it is possible to measure a larger thickness. In addition, compared to conventional techniques that use only the detection result of transmitted X-rays, the thickness of each of a plurality of layers can be more easily measured by using both the fluorescent X-rays and the transmitted X-rays in the present embodiment. Therefore, it is possible to measure the thickness of each layer of a multi-layer sample, which has been difficult to measure using conventional techniques.

In the present embodiment, Equation (2) is created using the intensity of transmitted X-rays at the energy $E_1$ that does not correspond to the position of the peak included in the spectrum of fluorescent X-rays and the mass absorption coefficient for X-rays at the energy $E_1$. Equation (2) is a relational equation that expresses the relationship between the intensity of the transmitted X-rays and the thicknesses of the first layer 31 and the second layer 32. When the intensity of the detected transmitted X-rays includes the intensity of the fluorescent X-rays, the relationship between the intensity of the transmitted X-rays and the thicknesses of the first layer 31 and the second layer 32 deviates from Equation (2). By using the energy $E_1$ that does not correspond to the position of the peak of the fluorescent X-rays, the fluorescent X-rays included in the intensity of the transmitted X-rays are eliminated, and accordingly, Equation (2) is satisfied.

Since the energy $E_1$ does not have to correspond to the position of the peak of the fluorescent X-rays, it is possible to select the energy $E_1$ at which the intensity of the detected transmitted X-rays is as large as possible. For example, it is possible to select the energy $E_1$ higher than the position of the peak of the fluorescent X-rays. Since the S/N ratio (signal-to-noise ratio) increases as the intensity of the transmitted X-rays increases, the calculation of Equation (2) can be performed accurately. In addition, since the intensity of the transmitted X-rays is high, it is possible to measure the thickness of sample 3 even when the thickness is large. Therefore, it is possible to measure the thickness of each layer of the sample 3, which is thicker than in the past.

In the present embodiment, Equation (3) is created using the theoretical intensities of the fluorescent X-rays and the transmitted X-rays at the energy $E_2$ corresponding to the position of the peak included in the spectrum of the fluorescent X-rays and the intensities of the detected fluorescent X-rays and transmitted X-rays at the energy $E_2$. Equation (3) is a relational equation that expresses the relationship between the theoretical intensity ratio of the fluorescent X-rays and the transmitted X-rays and the intensity ratio of the detected fluorescent X-rays and transmitted X-rays. By using the energy $E_2$ corresponding to the position of the peak of the fluorescent X-rays, the intensity of the detected fluorescent X-rays increases, and accordingly, the S/N ratio increases. By using the intensity of the fluorescent X-rays, which have a large S/N ratio, the calculation of Equation (3) can be performed accurately.

In the above explanation, an example has been shown in which the sample 3 includes the first layer 31 and the second layer 32. However, the X-ray analysis apparatus 100 may be configured to measure the thickness of each layer included in the sample 3 that includes three or more stacked layers. It is assumed that the sample 3 includes a specific number of layers (three or more layers), which are a first layer 31, a second layer 32, and a third layer 33, .... It is assumed that the thicknesses of the respective layers are $t_1$, $t_2$, $t_3$, ..., the densities are $\rho_1$, $\rho_2$, $\rho_3$, ..., and the mass absorption coefficients are $\mu_1$, $\mu_2$, $\mu_3$, .... In the process of S10, the analysis unit 1 creates the specific number of relational equations.

In S10, the analysis unit 1 creates the following Equation (4) as the first relational equation, similarly to Equation (2).

$$\mu_1(E_1)\rho_1 t_1 + \mu_2(E_1)\rho_2 t_2 + \mu_3(E_1)\rho_3 t_3 + \ldots + \ln(I_T(E_1)/I_0(E_1)) = 0 \ldots (4)$$

In addition, the analysis unit 1 creates the following Equation (5) as the second relational equation, similarly to Equation (3).

$$I_F{\sim}(E_2, t_1, t_2, t_3, \ldots)/I_T{\sim}(E_2, t_1, t_2, t_3, \ldots) - I_F(E_2)/I_T(E_2) = 0 \ldots (5)$$

In addition, the analysis unit 1 creates other relational equations. For example, the analysis unit 1 creates a first relational equation in which the energy is $E_1^{(2)}$ different from the first energy $E_1$ or a second relational equation in which the energy is $E_2^{(2)}$ different from the second energy $E_2$. The first relational equation in which the energy is $E_1^{(2)}$ is expressed by the following Equation (6), and the second relational equation in which the energy is $E_2^{(2)}$ is expressed by the following Equation (7). Equation (6) is the first relational equation related to the energy $E_1^{(2)}$, and equation (7) is the second relational equation related to the energy $E_2^{(2)}$.

$$\mu_1(E_1^{(2)})\rho_1 t_1 + \mu_2(E_1^{(2)})\rho_2 t_2 + \mu_3(E_1^{(2)})\rho_3 t_3 + \ldots + \ln(I_T(E_1^{(2)})/I_0(E_1^{(2)})) = 0 \ldots (6)$$

$$I_F{\sim}(E_2^{(2)}, t_1, t_2, t_3, \ldots)/I_T{\sim}(E_2^{(2)}, t_1, t_2, t_3, \ldots) - I_F(E_2^{(2)})/I_T(E_2^{(2)}) = 0 \ldots (7)$$

For example, the analysis unit 1 may create a second relational equation using the theoretical intensity of the fluorescent X-rays generated from the second layer 32 and the detected intensity. Assuming that the energy corresponding to the position of the peak of the fluorescent X-rays generated from the second layer 32 is $E_2^{(3)}$, this second relational equation is expressed by the following Equation (8).

$$I_F{\sim}(E_2^{(3)}, t_1, t_2, t_3, \ldots)/I_T{\sim}(E_2^{(3)}, t_1, t_2, t_3, \ldots) - I_F(E_2^{(3)})/I_T(E_2^{(3)}) = 0 \ldots (8)$$

When the total thickness of the sample 3 is known, the analysis unit 1 may create a relational equation between the thickness of each layer and the total thickness. Assuming that the total thickness of the sample 3 is D, the relationship between the thickness of each layer and the total thickness is expressed by the following Equation (9).

$$t_1 + t_2 + t_3 + \ldots = D \ldots (9)$$

In S10, for example, when the sample 3 includes three layers, the analysis unit 1 creates three relational equations. In S11, the analysis unit 1 calculates the thickness of each layer by determining, through optimization calculation, the thickness of each layer that simultaneously satisfies the specific number of relational equations created in S10. In this manner, the X-ray analysis apparatus 100 measures the thickness of each layer included in the sample 3 through the processes of S1 to S12. By creating three or more relational equations using a first or second relational equation and the like related to energy different from $E_1$ or $E_2$, it is possible to measure the thickness of each layer even when the sample 3 includes a specific number of layers (three or more layers).

<Embodiment 2>

The configuration of an X-ray analysis apparatus 100 according to Embodiment 2 is similar to that in Embodiment 1. In Embodiment 2, the analysis unit 1 does not use the second relational equation that expresses the relationship between the theoretical intensity ratio of fluorescent X-rays and transmitted X-rays and the intensity ratio of detected fluorescent X-rays and transmitted X-rays. Instead, the analysis unit 1 uses a third relational equation that expresses the relationship between the theoretical intensity of fluorescent X-rays corresponding to the thickness of each layer and the intensity of detected fluorescent X-rays and a fourth relational equation that expresses the relationship between the theoretical intensity of transmitted X-rays corresponding to the thickness of each layer and the intensity of detected transmitted X-rays.

If the theoretical intensity of the fluorescent X-rays is accurately calculated, the theoretical intensity of the fluorescent X-rays is equal to the intensity of the detected fluorescent X-rays. Therefore, as a third relational equation that expresses the relationship between the theoretical intensity $I_F{\sim}(E_2, t_1, t_2)$ of fluorescent X-rays corresponding to the thickness of each layer and the intensity $I_F(E_2)$ of detected fluorescent X-rays, the following Equation (10) is satisfied. Equation (10) is the third relational equation related to the second energy $E_2$.

$$I_F{\sim}(E_2, t_1, t_2) = I_F(E_2) \ldots (10)$$

If the theoretical intensity of the transmitted X-rays is accurately calculated, the theoretical intensity of the transmitted X-rays is equal to the intensity of the detected transmitted X-rays. The third energy is $E_3$. As a fourth relational equation that expresses the relationship between the theoretical intensity $I_T{\sim}(E_3, t_1, t_2)$ of transmitted X-rays corresponding to the thickness of each layer and the intensity $I_T(E_3)$ of detected transmitted X-rays, the following Equation (11) is satisfied.

$$I_T{\sim}(E_3, t_1, t_2) = I_T(E_3) \ \dots \ (11)$$

Equation (11) is the fourth relational equation related to the third energy $E_3$. $E_3$ may be different from $E_2$. In addition, it is preferable that $E_3$ is different from $E_1$. Both Equations (10) and (11) include the thickness $t_1$ of the first layer 31 and the thickness $t_2$ of the second layer 32 as variables.

The X-ray analysis apparatus 100 performs the processes S1 to S12 in order to measure the thickness of each layer of the sample 3. The X-ray analysis apparatus 100 performs the processes S1 to S7 in the same manner as in Embodiment 1. In S8, the analysis unit 1 specifies two energies among the first energy $E_1$, the second energy $E_2$, and the third energy $E_3$. The X-ray analysis apparatus 100 performs the process of S9 in the same manner as in Embodiment 1. In S10, the analysis unit 1 creates two relational equations from among Equations (2), (10), and (11). In S11, the analysis unit 1 calculates the thickness of each layer by determining, through optimization calculation, the thickness of each layer that simultaneously satisfies the two created relational equations. The X-ray analysis apparatus 100 performs the process of S12 as in Embodiment 1, and ends the process.

In Embodiment 2 as well, the X-ray analysis apparatus 100 detects fluorescent X-rays and transmitted X-rays, and calculates the thickness of each layer so as to simultaneously satisfy a plurality of relational equations that express the relationship between the intensity of detected transmitted X-rays or fluorescent X-rays and the thickness of each layer of the sample 3. In Embodiment 2 as well, it is possible to measure a larger thickness than in the conventional techniques, and it is possible to more easily measure the thickness of each of a plurality of layers. Therefore, it is possible to measure the thickness of each layer of a multi-layer sample, which has been difficult to measure using conventional techniques.

In Embodiment 2 as well, the X-ray analysis apparatus 100 may be configured to measure the thickness of each layer included in the sample 3 that includes three or more stacked layers. It is assumed that the sample 3 includes a specific number of layers (three or more layers). In the process of S10, the analysis unit 1 creates a specific number of relational equations. For example, when the sample 3 includes three layers, the analysis unit 1 creates Equations (2), (10), and (11) in S10, and calculates the thickness of each layer so as to simultaneously satisfy the three created relational equations in S11.

In S10, the analysis unit 1 may create other relational equations. For example, the analysis unit 1 may create a first relational equation in which the energy is $E_1^{(2)}$ that is different from the first energy $E_1$. For example, the analysis unit 1 may create a third relational equation in which the energy is $E_2^{(2)}$ that is different from the second energy $E_2$ or a fourth relational equation in which the energy is $E_3^{(2)}$ that is different from the third energy $E_3$. For example, the analysis unit 1 may create a third relational equation using the theoretical intensity of the fluorescent X-rays generated from the second layer 32 and the detected intensity. When the total thickness of the sample 3 is known, the analysis unit 1 may create a relational equation between the thickness of each layer and the total thickness.

In S11, the analysis unit 1 calculates the thickness of each layer by determining, through optimization calculation, the thickness of each layer that simultaneously satisfies the specific number of relational equations created in S10. Thus, in Embodiment 2 as well, even when the sample 3 includes a specific number of layers (three or more layers), the X-ray analysis apparatus 100 can measure the thickness of each layer by creating three or more relational equations.

<Embodiment 3>

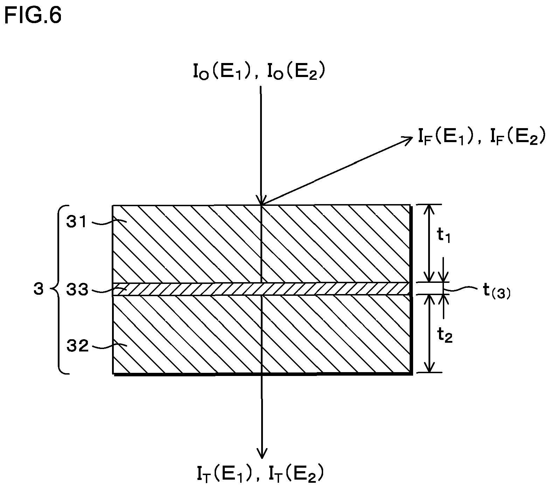

In Embodiment 3, an example is shown in which the thicknesses of some of the layers included in the sample 3 are known. The configuration of the X-ray analysis apparatus 100 according to Embodiment 3 is similar to that in Embodiment 1. FIG. 6 is a schematic cross-sectional view showing an example of the sample 3 according to Embodiment 3. The sample 3 includes a first layer 31, a second layer 32, and a third layer 33 interposed between the first layer 31 and the second layer 32. X-rays emitted to the sample 3 pass through the sample 3 in the order of the first layer 31, the third layer 33, and the second layer 32.

The thickness $t_1$ of the first layer 31 and the thickness $t_2$ of the second layer 32 are unknown, while the thickness of the third layer 33 is known. The known thickness of the third layer 33 is $t_{(3)}$. For example, the first layer 31 and the second layer 32 are metal layers containing platinum, the third layer 33 is an organic film, and the sample 3 is a part of the material of an electrode of a fuel cell.

In Embodiment 3, the following Equation (12) is used as the first relational equation. Equation (12) is obtained by setting the number of layers to three and substituting $t_3$ with $t_{(3)}$, which is a known constant, in Equation (4).

$$\mu_1(E_1)\rho_1 t_1 + \mu_2(E_1)\rho_2 t_2 + \mu_3(E_1)\rho_3 t_{(3)} + \ln(I_T(E_1)/I_0(E_1)) = 0 \ \dots \ (12)$$

As the second relational equation, the following Expression (13) is used. Equation (13) is obtained by setting the number of layers to three and substituting $t_3$ with $t_{(3)}$, which is a known constant, in Equation (5).

$$I_F{\sim}(E_2, t_1, t_2, t_{(3)})/I_T{\sim}(E_2, t_1, t_2, t_{(3)}) - I_F(E_2)/I_T(E_2) = 0 \dots (13)$$

When the components of the first layer 31 and the second layer 32 are the same, the detected fluorescent X-rays may include fluorescent X-rays from the second layer 32 in addition to fluorescent X-rays from the first layer 31. Therefore, it is desirable that the energy $E_2$ is an energy corresponding to the position of the peak included in the spectrum of fluorescent X-rays and is the energy of fluorescent X-rays that are generated from the second layer 32 and shielded as much as possible by the first layer 31 or the third layer 33. For example, when the first layer 31 and the second layer 32 are metal layers containing platinum, the energy $E_2$ is the energy of the M line of platinum. By using such energy $E_2$, accurate Equation (13) can be obtained, and the thickness $t_1$ of the first layer 31 and the thickness $t_2$ of the second layer 32 can be accurately calculated.

In Embodiment 3 as well, the X-ray analysis apparatus 100 performs S1 to S12. In S10, the analysis unit 1 creates Equation (12) as the first relational equation, and creates Equation (13) as the second relational equation. In S11, the analysis unit 1 measures the thickness $t_1$ of the first layer 31 and the thickness $t_2$ of the second layer 32 by determining, through optimization calculation, the thickness of each layer that simultaneously satisfies Equations (12) and (13) created in S10.

As described above, in Embodiment 3 as well, the X-ray analysis apparatus 100 can measure the thickness of each layer even when the thicknesses of some of the layers included in the sample 3 are known. Similarly, when the sample 3 includes more than three layers and the thickness of any of the layers is known, the thickness of each layer can be measured by using equations obtained by replacing the thickness of any of the layers with a known value in Equations (4) and (5), and, if necessary, using equations obtained by replacing the thickness of any of the layers with a known value in Equations (6) to (9).

In Embodiments 1 to 3, the fluorescent X-ray detector 22 and the transmitted X-ray detector 23 are radiation detectors having radiation detection elements formed using semiconductors. The fluorescent X-ray detector 22 and the transmitted X-ray detector 23 may be radiation detectors having radiation detection elements other than those formed using semiconductors. The fluorescent X-ray detector 22 and the transmitted X-ray detector 23 may be detectors having a plurality of channels. For example, the fluorescent X-ray detector 22 and the transmitted X-ray detector 23 may be strip detectors, pixel array detectors, or line sensors, or may be configured to include a plurality of detectors arranged side by side. When a detector having a plurality of channels is used, it is possible to perform measurement at a higher counting rate than when a detector having a single channel is used.

The fluorescent X-ray detector 22 and the transmitted X-ray detector 23 are not limited to energy dispersive detectors, and may be any detector capable of detecting the intensity of X-rays of a specific energy. For example, the fluorescent X-ray detector 22 and the transmitted X-ray detector 23 may be configured using a CCD (Charge Coupled Device) photosensor or a CMOS (Complementary Metal-Oxide-Semiconductor) photosensor, or may be configured using a combination of a photomultiplier tube and a scintillator. Such detectors may be used in combination with filters that transmit X-rays of a specific energy or elements that collect X-rays of a specific energy by diffraction.

In Embodiments 1 to 3, an example has been shown in which the horizontal axis of the X-ray spectrum is energy, but the X-ray analysis apparatus 100 may be configured to handle a spectrum in which the horizontal axis is a value other than energy, such as a wavelength or a wave number. In this form, the analysis unit 1 may perform a process of calculating the thickness of each layer of the sample 3 using two wavelengths or wave numbers corresponding to two energies.

The present invention is not limited to the content of the above-described embodiments, and various changes can be made within the scope of the claims. That is, embodiments obtained by combining technical means appropriately changed within the scope of the claims are also included in the technical scope of the present invention.

The features described in the respective embodiments can be combined with each other. In addition, the independent claims and the dependent claims described in the claims can be combined with each other in all combinations, regardless of the citation form. In addition, although the form of multiple claims that cite two or more other claims (multi-claim form) is used in the scope of claims, the present invention is not limited thereto. A form of multi-claim (multi-multi claims) that cites at least one multi-claim can also be used.

Reference Signs List

100   X-ray analysis apparatus
1        analysis unit
10      recording medium
141    computer program
21      irradiation unit

22    fluorescent X-ray detector
23    transmitted X-ray detector
3     sample
31    first layer
32    second layer

**Claims**

1.  A thickness measurement method, **characterized by** comprising:

    irradiating a sample including a plurality of layers with X-rays so that the X-rays pass through the plurality of layers;
    detecting fluorescent X-rays generated from the sample;
    detecting transmitted X-rays that have passed through the sample;
    creating a first relational equation that expresses a relationship between an intensity of the detected transmitted X-rays and a thickness of each layer and a second relational equation that expresses a relationship between a theoretical intensity ratio of the fluorescent X-rays and the transmitted X-rays corresponding to the thickness of each layer and an intensity ratio of the detected fluorescent X-rays and the detected transmitted X-rays; and
    calculating the thickness of each layer that simultaneously satisfies the first relational equation and the second relational equation.

2.  The thickness measurement method according to claim 1, **characterized in that**

    the sample includes three or more layers,
    the first relational equation related to a specific first energy, the second relational equation related to a specific second energy, and the first relational equation or the second relational equation related to another energy different from the first energy or the second energy are created, and
    the thickness of each layer that simultaneously satisfies the first relational equation related to the first energy, the second relational equation related to the second energy and the first relational equation or the second relational equation related to the another energy is calculated.

3.  A thickness measurement method, **characterized by** comprising:

    irradiating a sample including a plurality of layers with X-rays so that the X-rays pass through the plurality of layers;
    detecting fluorescent X-rays generated from the sample;
    detecting transmitted X-rays that have passed through the sample;
    creating a plurality of relational equations from among a first relational equation that expresses a relationship between an intensity of the detected transmitted X-rays and a thickness of each layer, a third relational equation that expresses a relationship between a theoretical intensity of the fluorescent X-rays corresponding to the thickness of each layer and an intensity of the detected fluorescent X-rays, and a fourth relational equation that expresses a relationship between a theoretical intensity of the transmitted X-rays corresponding to the thickness of each layer and the intensity of the detected transmitted X-rays; and
    calculating the thickness of each layer that simultaneously satisfies the plurality of relational equations.

4.  The thickness measurement method according to claim 3, **characterized in that**

    the sample includes a specific number of layers that are three or more layers,
    the specific number of relational equations is created from among the first relational equation related to a specific first energy, the third relational equation related to a specific second energy, the fourth relational equation related to a specific third energy, and the first relational equation, the third relational equation or the fourth relational equation related to another energy different from the first, second or third energy, and
    the thickness of each layer that simultaneously satisfies the specific number of created relational equations is calculated.

5.  The thickness measurement method according to any one of claims 1 to 4, **characterized in that**

    X-rays to be emitted to the sample are generated and detected without the sample at a lower output than when the X-rays are emitted to the sample, and
    the first relational equation is an equation that expresses a relationship between a ratio of the intensity of the detected transmitted X-rays to the intensity of the detected X-rays and a thickness and a density of each layer and a mass absorption coefficient of each layer for X-rays.

6. The thickness measurement method according to claim 5, **characterized in that**
the first relational equation is created using an intensity of the transmitted X-rays at an energy that does not correspond to a position of a peak of the fluorescent X-rays included in a spectrum of the fluorescent X-rays and a mass absorption coefficient for the X-rays at the energy.

7. The thickness measurement method according to claim 1 or 2, **characterized in that**
the second relational equation is created using theoretical intensities of the fluorescent X-rays and the transmitted X-rays at an energy corresponding to a position of a peak of the fluorescent X-rays included in a spectrum of the fluorescent X-rays and intensities of the detected fluorescent X-rays and the detected transmitted X-rays at the energy.

8. The thickness measurement method according to claim 3 or 4, **characterized in that**
the third relational equation is created using the theoretical fluorescent X-rays at an energy corresponding to a position of a peak of the fluorescent X-rays included in a spectrum of the fluorescent X-rays and an intensity of the detected fluorescent X-rays at the energy.

9. The thickness measurement method according to claim 7 or 8, **characterized in that**
the peak of the fluorescent X-rays is a peak of fluorescent X-rays caused by an element contained in a layer through which X-rays pass first among the plurality of layers.

10. An X-ray analysis apparatus, **characterized by** comprising:

an irradiation unit that irradiates a sample including a plurality of layers with X-rays so that the X-rays pass through the plurality of layers;
a fluorescent X-ray detector that detects fluorescent X-rays generated from the sample;
a transmitted X-ray detector that detects transmitted X-rays that have passed through the sample; and
an analysis unit,
wherein the analysis unit creates a first relational equation that expresses a relationship between an intensity of the detected transmitted X-rays and a thickness of each layer and a second relational equation that expresses a relationship between a theoretical intensity ratio of the fluorescent X-rays and the transmitted X-rays corresponding to the thickness of each layer and an intensity ratio of the detected fluorescent X-rays and the detected transmitted X-rays, and calculates the thickness of each layer that simultaneously satisfies the first relational equation and the second relational equation.

11. An X-ray analysis apparatus, **characterized by** comprising:

an irradiation unit that irradiates a sample including a plurality of layers with X-rays so that the X-rays pass through the plurality of layers;
a fluorescent X-ray detector that detects fluorescent X-rays generated from the sample;
a transmitted X-ray detector that detects transmitted X-rays that have passed through the sample; and
an analysis unit,
wherein the analysis unit creates a plurality of relational equations from among a first relational equation that expresses a relationship between an intensity of the detected transmitted X-rays and a thickness of each layer, a third relational equation that expresses a relationship between a theoretical intensity of the fluorescent X-rays corresponding to the thickness of each layer and an intensity of the detected fluorescent X-rays, and a fourth relational equation that expresses a relationship between a theoretical intensity of the transmitted X-rays corresponding to the thickness of each layer and the intensity of the detected transmitted X-rays, and calculates the thickness of each layer that simultaneously satisfies the plurality of relational equations.

12. An information processing apparatus, **characterized by** comprising:

an acquisition unit that acquires a detection result of fluorescent X-rays, which are generated from a sample including a plurality of layers by irradiating the sample with X-rays so that the X-rays pass through the plurality of layers, and a detection result of transmitted X-rays that have passed through the sample;
a relational equation creation unit that creates a first relational equation that expresses a relationship between an intensity of the detected transmitted X-rays and a thickness of each layer and a second relational equation that expresses a relationship between a theoretical intensity ratio of the fluorescent X-rays and the transmitted X-rays corresponding to the thickness of each layer and an intensity ratio of the detected fluorescent X-rays and the detected transmitted X-rays; and

a calculation unit that calculates the thickness of each layer that simultaneously satisfies the first relational equation and the second relational equation.

13. An information processing apparatus, **characterized by** comprising:

an acquisition unit that acquires a detection result of fluorescent X-rays, which are generated from a sample including a plurality of layers by irradiating the sample with X-rays so that the X-rays pass through the plurality of layers, and a detection result of transmitted X-rays that have passed through the sample;
a relational equation creation unit that creates a plurality of relational equations from among a first relational equation that expresses a relationship between an intensity of the detected transmitted X-rays and a thickness of each layer, a third relational equation that expresses a relationship between a theoretical intensity of the fluorescent X-rays corresponding to the thickness of each layer and an intensity of the detected fluorescent X-rays, and a fourth relational equation that expresses a relationship between a theoretical intensity of the transmitted X-rays corresponding to the thickness of each layer and the intensity of the detected transmitted X-rays; and
a calculation unit that calculates the thickness of each layer that simultaneously satisfies the plurality of relational equations.

14. A computer program, **characterized by** causing a computer to execute processing of:

creating a first relational equation, which is based on a detection result of transmitted X-rays passing through a sample including a plurality of layers by irradiating the sample with X-rays so that the X-rays pass through the plurality of layers and which expresses a relationship between an intensity of the detected transmitted X-rays and a thickness of each layer, and a second relational equation, which is based on a detection result of fluorescent X-rays generated from the sample and a detection result of the transmitted X-rays and which expresses a relationship between a theoretical intensity ratio of the fluorescent X-rays and the transmitted X-rays corresponding to the thickness of each layer and an intensity ratio of the detected fluorescent X-rays and the detected transmitted X-rays; and
calculating the thickness of each layer that simultaneously satisfies the first relational equation and the second relational equation.

15. A computer program, **characterized by** causing a computer to execute processing of:

creating a plurality of relational equations from among a first relational equation that is based on a detection result of transmitted X-rays passing through a sample including a plurality of layers by irradiating the sample with X-rays so that the X-rays pass through the plurality of layers and that expresses a relationship between an intensity of the detected transmitted X-rays and a thickness of each layer, a third relational equation that is based on a detection result of fluorescent X-rays generated from the sample and that expresses a relationship between a theoretical intensity of the fluorescent X-rays corresponding to the thickness of each layer and an intensity of the detected fluorescent X-rays, and a fourth relational equation that expresses a relationship between a theoretical intensity of the transmitted X-rays corresponding to the thickness of each layer and the intensity of the detected transmitted X-rays; and
calculating the thickness of each layer that simultaneously satisfies the plurality of relational equations.

FIG.1

FIG.2

FIG.3

$I_O(E_1)$, $I_O(E_2)$

$I_F(E_1)$, $I_F(E_2)$

31

3

32

$t_1$

$t_2$

$I_T(E_1)$, $I_T(E_2)$

FIG.4

The Intensity of
Transmitted X-Rays

Energy

The Intensity of The
Fluorescent X-Rays

Energy

$E_2$    $E_1$

## FIG.5

```
                    ( Start )
                        |
  ┌─────────────────────────────────────────┐ S1
  │            Detect X-rays                 │
  └─────────────────────────────────────────┘
                        |
  ┌─────────────────────────────────────────┐ S2
  │      Acquire the X-ray detection result  │
  └─────────────────────────────────────────┘
                        |
  ┌─────────────────────────────────────────┐ S3
  │      Irradiate the sample with X-rays    │
  └─────────────────────────────────────────┘
                        |
  ┌─────────────────────────────────────────┐ S4
  │        Detect fluorescent X-rays         │
  └─────────────────────────────────────────┘
                        |
  ┌─────────────────────────────────────────┐ S5
  │        Detect transmitted X-rays         │
  └─────────────────────────────────────────┘
                        |
  ┌─────────────────────────────────────────┐ S6
  │    Acquire the detection results of the  │
  │   fluorescent X-rays and the transmitted │
  │                 X-rays                   │
  └─────────────────────────────────────────┘
                        |
  ┌─────────────────────────────────────────┐ S7
  │           Specify the elements           │
  └─────────────────────────────────────────┘
                        |
  ┌─────────────────────────────────────────┐ S8
  │       Specify a plurality of energies    │
  └─────────────────────────────────────────┘
                        |
  ┌─────────────────────────────────────────┐ S9
  │  Specify the mass absorption coefficient │
  │             and the density              │
  └─────────────────────────────────────────┘
                        |
  ┌─────────────────────────────────────────┐ S10
  │   Create a plurality of relational equations │
  └─────────────────────────────────────────┘
                        |
  ┌─────────────────────────────────────────┐ S11
  │     Calculate the thickness of each layer │
  └─────────────────────────────────────────┘
                        |
  ┌─────────────────────────────────────────┐ S12
  │           Output the thickness           │
  └─────────────────────────────────────────┘
                        |
                    ( End )
```

FIG.6

$I_O(E_1)$, $I_O(E_2)$

$I_F(E_1)$, $I_F(E_2)$

31

3 { 33

32

$t_1$

$t_{(3)}$

$t_2$

$I_T(E_1)$, $I_T(E_2)$

<div align="center">

**INTERNATIONAL SEARCH REPORT**

</div>

| International application No. |
|---|
| **PCT/JP2023/023772** |

| | |
|---|---|
| **A. CLASSIFICATION OF SUBJECT MATTER** | |
| *G01B 15/02*(2006.01)i; *G01N 23/087*(2018.01)i; *G01N 23/223*(2006.01)i<br>FI:   G01B15/02 A; G01N23/087; G01N23/223 | |
| According to International Patent Classification (IPC) or to both national classification and IPC | |

| |
|---|
| **B. FIELDS SEARCHED** |
| Minimum documentation searched (classification system followed by classification symbols)<br>    G01B15/00-15/08; G01N23/000-23/2276 |
| Documentation searched other than minimum documentation to the extent that such documents are included in the fields searched<br>    Published examined utility model applications of Japan 1922-1996<br>    Published unexamined utility model applications of Japan 1971-2023<br>    Registered utility model specifications of Japan 1996-2023<br>    Published registered utility model applications of Japan 1994-2023 |
| Electronic data base consulted during the international search (name of data base and, where practicable, search terms used)<br><br> |

| |
|---|
| **C. DOCUMENTS CONSIDERED TO BE RELEVANT** |

| Category* | Citation of document, with indication, where appropriate, of the relevant passages | Relevant to claim No. |
|---|---|---|
| A | JP 2003-057195 A (X-RAY PRECISION INC) 26 February 2003 (2003-02-26)<br>    paragraphs [0001], [0012]-[0031], fig. 1-5 | 1-15 |
| A | Microfilm of the specification and drawings annexed to the request of Japanese Utility Model Application No. 123315/1984 (Laid-open No. 038509/1986) (SUMITOMO METAL IND) 11 March 1986 (1986-03-11), p. 3, line 8 to p. 6, line 13, drawings, fig. 1-3 | 1-15 |
| A | JP 63-091506 A (KAWASAKI STEEL CORP, RIGAKU KEISOKU KK) 22 April 1988 (1988-04-22)<br>    p. 3, lower left column to p. 4, upper left column, drawings, fig. 1-4 | 1-15 |

| | |
|---|---|
| ☐ Further documents are listed in the continuation of Box C. | ☑ See patent family annex. |

| | |
|---|---|
| *    Special categories of cited documents:<br>"A"  document defining the general state of the art which is not considered<br>      to be of particular relevance<br>"E"  earlier application or patent but published on or after the international<br>      filing date<br>"L"  document which may throw doubts on priority claim(s) or which is<br>      cited to establish the publication date of another citation or other<br>      special reason (as specified)<br>"O"  document referring to an oral disclosure, use, exhibition or other<br>      means<br>"P"  document published prior to the international filing date but later than<br>      the priority date claimed | "T"  later document published after the international filing date or priority<br>      date and not in conflict with the application but cited to understand the<br>      principle or theory underlying the invention<br>"X"  document of particular relevance; the claimed invention cannot be<br>      considered novel or cannot be considered to involve an inventive step<br>      when the document is taken alone<br>"Y"  document of particular relevance; the claimed invention cannot be<br>      considered to involve an inventive step when the document is<br>      combined with one or more other such documents, such combination<br>      being obvious to a person skilled in the art<br>"&"  document member of the same patent family |

| | |
|---|---|
| Date of the actual completion of the international search<br><br>**07 September 2023** | Date of mailing of the international search report<br><br>**26 September 2023** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

### INTERNATIONAL SEARCH REPORT
**Information on patent family members**

International application No.

**PCT/JP2023/023772**

| Patent document cited in search report | | | Publication date (day/month/year) | Patent family member(s) | Publication date (day/month/year) |
|---|---|---|---|---|---|
| JP | 2003-057195 | A | 26 February 2003 | (Family: none) | |
| JP | 61-038509 | U1 | 11 March 1986 | (Family: none) | |
| JP | 63-091506 | A | 22 April 1988 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 11287643 A